# EUROPEAN PATENT SPECIFICATION

(11) **EP 2 728 825 B1**
(45) Date of publication and mention of the grant of the patent: **19.08.2015**
(21) Application number: 12190871.9
(22) Date of filing: 31.10.2012
(51) Int. Cl.: H04L 29/06, G06F 21/10

(54) **Terminal apparatus with DRM decoding function and DRM decoding method in terminal apparatus**
Endgerätvorrichtung mit DRM-Decodierfunktion und DRM-Decodierverfahren in einer Endgerätvorrichtung
Appareil de terminal avec fonction de décodage DRM et procédé de décodage DRM dans un appareil de terminal

(43) Date of publication of application: 07.05.2014
(73) Proprietor: Inka Entworks, Inc., Seoul 140-872 (KR)
(72) Inventor: Ahn, Sung Min, 135-240 Seoul (KR); Park, Jung Geun, 135-080 Seoul (KR); Hong, Jin Seon, 151-844 Seoul (KR); Lee, Sung Woo, 136-777 Seoul (KR); An, Woon Sang, 447-715 Gyeonggi-Do (KR)
(74) Representative: Baronetzky, Klaus

(56) References cited:
- WO-A2-2012/151068
- US-A1- 2002 161 996
- US-A1- 2009 327 094

## Description

### TECHNICAL FIELD

The present invention relates to a terminal apparatus with a DRM decoding function and a DRM decoding method in a terminal apparatus, and particularly to a terminal apparatus with a DRM decoding function, which has a local web server module therein and decodes DRM media content data stored in the terminal apparatus using a URL path for web server, and a DRM decoding method in a terminal apparatus.

### BACKGROUND OF THE INVENTION

DRM (Digital Rights Management) is a technology for managing the copyright of digital contents and also preventing the digital media contents from being illegally used. The DRM can provide a strong level of security based on an encryption technique of various kinds of media content protection techniques and also can support various business models, and thus it has been applied to various media content service areas such as music, video, e-Book and e-Learning since the early 2000s.

Meanwhile, a terminal apparatus with an operating system is being propagated rapidly, and iPhone of Apple Inc and Android phone running Google's Android operating system are the representative terminal apparatuses.

However, when supporting the DRM of audio/video media contents in the terminal apparatus with such operating system, it is not possible to apply a decoding module used in a general PC (Personal Computer) environment. Therefore, an exclusive DRM decoding module is directly built in the terminal apparatus. A typical example thereof is FairPaly of Apple Inc.

The FairPaly as a DRM technique made by Apple Inc is built in QuickTime multimedia software and used in iPhone, iPot and iTune. The media contents of Apple Inc can be purchased on the iTune store. Since the media contents are provided in the state of being encrypted by the FairPaly, they cannot be decoded in other unauthorized terminal apparatuses except iPhone, iPot and iTune of Apple Inc.

However, in case of the exclusive DRM decoding module which is directly built in the operating system, it is difficult to change source code of a built-in media device player or add a function due to the nature of operating system. Therefore, there is a requirement for a new DRM decoding technique which can use its own function and media device player regardless of a version of the operating system of the terminal apparatus.

A method and a system for playing digital contents protected by a DRM scheme is disclosed by WO 2012/151068 A2. The digital contents are stored in a server and downloaded or streamed to a user device there. The approach includes executing a DRM application inside the user device implementing a proxy between the server and a native player of the user device, and connecting the DRM proxy application to the server, selecting a digital content to be downloaded and retrieving a corresponding remote playlist. American patent application US 2002/161996 describes a digital rights management (DRM) system and methodology for a Java client implementing a Java Runtime Environment.

### SUMMARY OF THE INVENTION

An object of the present invention is to provide a terminal apparatus with a DRM decoding function, which has a local web server module therein and decodes DRM media content data stored in the terminal apparatus using a URL path for web server, and a DRM decoding method in a terminal apparatus.

To achieve the object of the present invention, the present invention provides a terminal apparatus with a DRM decoding function comprising a native unit which is provided with a local file memory for storing DRM media content data and an application program for driving a media device player using an operating system; and a DRM decoding unit which reads the DRM media content data from the local file memory using a URL path for web server, when it is required from the application program to reproduce the DRM media content data, and decodes the read DRM media content data, and provides the decoded DRM media content data to the media device player.

Preferably, the DRM decoding unit converts a local file path of the DRM media content data into a URL path for web server, when it is required from the application program to reproduce the DRM media content data, and provides it to the media device player, and inversely converts the URL path for web server into the physical local file path of the DRM media content data, when it is required from the media device player to reproduce the DRM media content data, reads the DRM media content data from the local file memory, decodes the read DRM media content data and then provides the decoded DRM media content data to the media device player.

Preferably, the DRM decoding unit comprises a decoding module part which decodes the DRM media content data; a resource manager part which converts the local file path of the DRM media content data into the URL path for web server and then manages it; and a web server module part which receives the local file path of the DRM media content data corresponding to the URL path for web server, when it is required from the media device player to reproduce the DRM media content data, reads the DRM media content data from the local file memory, decodes the read DRM media content data using the decoding module, and then provides the decoded DRM media content data to the media device player.

Preferably, the web server module part comprises a request handler which provides the decoded media content data and HTTP response information in response to an HTTP (Hyper Text Transfer Protocol) range request from the media device player; and a file manager receives from the resource manager part the local file path of the DRM media content data corresponding to the URL path for web server, when the requirement for reproducing the DRM media content data is included in the HTTP range request, reads the DRM media content data from the local file memory, decodes the read DRM media content data using the decoding module, and then returns the decoded DRM media content data to the request handler.

Preferably, the request handler checks validity of the URL path for web server including GUID (Globally Unique Identifier), as an OTP (OneTime Password) concept which is changed whenever the DRM media content data is reproduced.

Preferably, the DRM decoding unit further comprises a license manager part which manages a license for the DRM media content data; and a media player controller part which performs the reproducing and controlling of the media device player, wherein the resource manager part provides the local file path of the DRM media content data to the license manager part so as to check whether there is a license, and then requests the reproduction of the URL path for web server to the media player controller part, when the license for the DRM media content data is normal.

Preferably, the decoding module part requests the checking of the license to the license manager part, when the read DRM media content data is received from the web server module part, receives a desired encryption key and then decodes the read DRM media content data.

Preferably, the DRM decoding unit further comprises a download manger part which downloads the DRM media content data from an external server and then stores it in the local file memory, and when it is required from the application program to reproduce the DRM media content data, the web server module part checks whether the download manager part completely downloads the corresponding DRM media content data before reading the corresponding DRM media content data.

Preferably, the DRM decoding unit further comprises a security manager part which checks whether the terminal apparatus is operated abnormally and then controls the DRM media content data read from the decoding module part so as to be decoded or not decoded according to security rules, when the terminal apparatus is operated abnormally.

Preferably, the web server module part calls the security manager part, when it is required from the media device player to reproduce the DRM media content data, and controls the DRM media content data read from the decoding module part so as to be not decoded, when packet sniffing that taps the networking traffic in a loopback environment is detected.

Further, the present invention provides a DRM decoding method in a terminal apparatus which is provided with a local file memory for storing DRM media content data and an application program for driving a media device player using an operating system, comprising a decoding step, using a URL path for web server, of reading the DRM media content data from the local file memory using the URL path for web server, when it is required from the application program to reproduce the DRM media content data, decoding the read DRM media content data and then providing the decoded DRM media content data to the media device player.

Preferably, the decoding step using the URL path for web server comprises converting a local file path of the DRM media content data into the URL path for web server, when it is required from the application program to reproduce the DRM media content data and then providing it to the media device player; inversely converting the URL path for web server into the local file path of the DRM media content data, when it is required from the media device player to reproduce the DRM media content data, reading the DRM media content data from the local file memory and then decoding the read DRM media content data; and providing the decoded DRM media content data to the media device player.

### BRIEF DESCRIPTION OF THE DRAWINGS

Fig. 1 is a schematic block diagram of a DRM system associated with a terminal apparatus according to an embodiment of the present invention.
Fig. 2 is a block diagram of a DRM decoding unit shown in Fig. 1.
Fig. 3 is a flow chart of a DRM decoding method in the terminal apparatus according to the embodiment of the present invention.

**[Detailed Description of Main Elements]**

| | | |
|---|---|---|
| 110: content providing server | | |
| 120: license issuing server | 130:PC | |
| 140: terminal apparatus with operating system | | |
| 150: native unit | 152: | application program |
| 154: media device player | 156: | local file memory |
| 160: DRM decoding unit | 162: | decoding core |
| 164: web module part | 166: | decoding module part |
| 168: license storage | | |

### DESCRIPTION OF SPECIFIC EMBODIMENTS

The advantages, features and aspects of the invention will become apparent from the following description of the embodiments with reference to the accompanying drawings, which is set forth hereinafter.

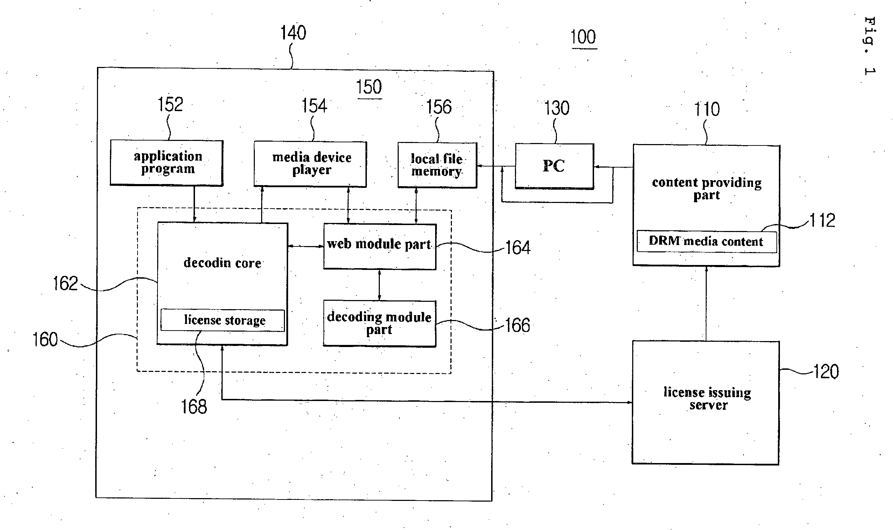

Fig. 1 is a schematic block diagram of a DRM system associated with a terminal apparatus according to an embodiment of the present invention.

As shown in Fig. 1, a DRM system 100 associated with a terminal apparatus includes a content providing server 110, a license issuing server 120, a PC (Personal Computer) 130 and a terminal apparatus 140 with an operating system.

The content providing server 110 stores DRM (Digital Rights Management) media contents 112 to be provided to users, which are encrypted by using an encryption key provided from the license issuing server 120.

The license issuing server 120 generates and issues a license for the DRM media contents 112 stored in the content providing server 110.

The PC 130 can be connected to the content providing server 110 through Internet, and a user is connected to the content providing server 110 through a log-in process and then downloads and stores the DRM media contents.

The terminal apparatus 140 with the operating system includes a native unit 150 for carrying out general functions of the terminal apparatus, and a DRM decoding unit 160 for decoding the DRM media contents. The terminal apparatus 140 with the operating system may be iPhone of Apple Inc and Android phone with Google's Android operating system.

The native unit 150 includes a plurality of application programs 152, a media device player 154 and a local file memory 156. When the user runs an application program 152 relevant to download, the native unit 150 downloads the DRM media contents stored in the PC 130 through USB (Universal Series Bus) and stores it as DRM media content data in the local file memory 156, or downloads the DRM media contents stored in the content providing server 110 via WiFi or the like and stores it as DRM media content data in the local file memory 156. The media device player may be MP Movie Player, AV Player(iOS+4), Audio Queue or the like.

The DRM decoding unit 160 includes a decoding core 162, a web server module part 164 and a decoding module part 166.

When it is required from the application program 152 to reproduce the DRM media content data stored in the local file memory 156, the decoding core 162 checks whether there is a license for the required DRM media content data in a license storage 168. If there is not the license for the required DRM media content data, the decoding core 162 is connected to the license issuing server 120 via the native unit 150. In this case, a secure channel is formed between the terminal apparatus 140 and the license issuing server 120 using a diffie-helman key distribution algorithm. The terminal apparatus 140 transmits a single identifier of the terminal apparatus 140 to the license issuing server 120, and the license issuing server 120 transmits a device-binding license using the single identifier of the terminal apparatus 140. The terminal apparatus 140 stores the device-binding license transmitted from the license issuing server 120 in the license storage 168. If there is the license for the required DRM media content data, the decoding core 162 converts the a physical local file path of the DRM media content data stored in the local file memory 156 into a virtual URL (Uniform Resource Locator) path for web server and then provides it to the media device player 154.

When it is required from the media device player 154 to reproduce the DRM media content data stored in the local file memory 156, the web server module part 164 inversely converts the URL path for web server into the physical local file path of the DRM media content data stored in the local file memory 156, reads the DRM media content data stored in the local file memory 156 using the physical local file path, decodes the read DRM media content data using the decoding module part 166 and then provides it to the media device player 154.

The decoding module part 166 decodes the DRM media content data provided from the web server module part 164. Herein, the decoding module part 166 decodes the DRM media content data using desired encryption key (CEK) information from the license storage 168.

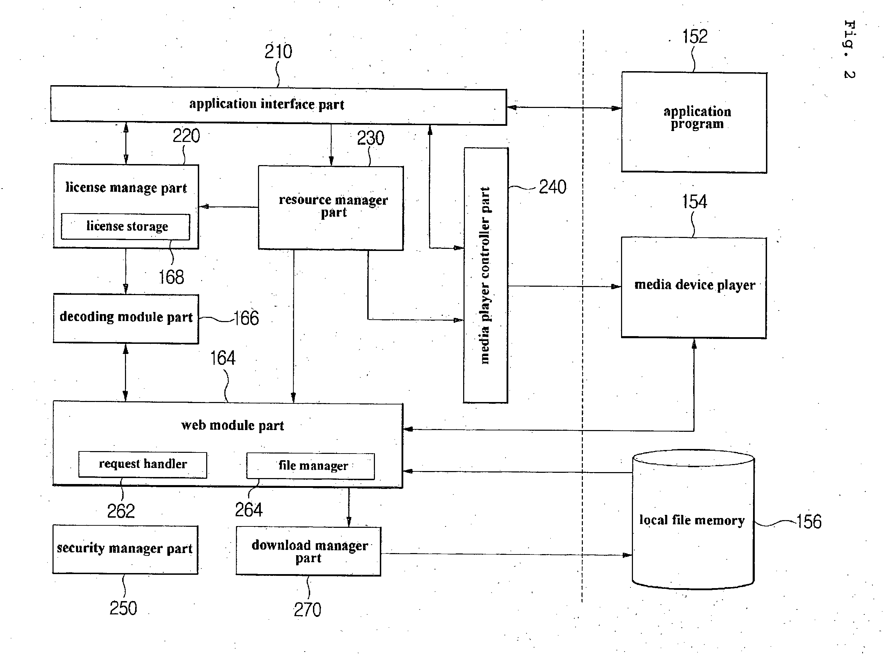

Fig. 2 is a block diagram of the DRM decoding unit shown in Fig. 1.

As shown in Fig. 2, the DRM decoding unit 160 includes an application interface part 210, a license manager part 220, a resource manager part 230, a media player controller part 240, the decoding module part 166, the web server module part 164, a security manager part 250 and a download manager part 270.

The application interface part 210 is to process the requirement for reproducing the DRM media content data stored in the local file memory 156 by the application program 152. When it is required from the application program 152 to reproduce the DRM media content data stored in the local file memory 156, the application interface part 210 provides interface functions which can call and control various functions for playing the media device player 154 and also functions to transmit various events associated with the playing of the media device player 154 to the application program 152.

The license manager part 220 includes the license storage 168 and is connected with the license issuing server 120 via the application interface part 210. The license manager part 220 performs issuing and renewing of the license for the DRM media content, when it is connected with the license issuing server 120. When it is required through the application interface part 210 to reproduce the DRM media content data, the license manager part 220 checks whether there is a license for the DRM media content data. If a license period is expired, or the number of reproduction times reaches the licensed number, the license manager part 220 invalidates the license for the DRM media content data.

The resource manager part 230 converts the physical local file path of the DRM media contents stored in the local file memory 156 into the URL path for web server and then manages it. When it is required from the application program 152 through the application interface part 210 to reproduce the DRM media content data stored in the local file memory 156, the resource manager part 230 converts the physical local file path of the required DRM media contents into the URL path for web server and then provides it to the media player controller part 240.

Further, the resource manager part 230 provides the local file path of the required DRM media contents to the license manager part 230 and also requests checking and issuing of the license for the required DRM media content data. Furthermore, if the license for the required DRM media content data is confirmed, the resource manager part 230 provides the URL path for web server to the media player controller part 240.

The media player controller part 240 generates a media device player object and performs reproduction and control of media contents. The media player controller part 240 executes a command of the application program 152 relevant to the media device player 154 and transmits an event generated from the media device player 154 to the application interface part 210. Further, if a command such as pausing, location searching, controlling of reproduction speed and stopping of reproduction is input from the application program 152 via the application interface part 210, the media player controller part 240 controls the media device player 154 according to the command.

The decoding module part 166 decodes the required DRM media content data read from the local file memory 156. The decoding module part 166 requests checking of the license to the license manager part 220, and then decodes the requested DRM media content data using the desired encryption key (CEK) information from the license manager part 220.

The web server module part 164 functions to return corresponding data of the required DRM media content in response to an HTTP (Hyper Text Transfer Protocol) range request from the resource manager part 230.

When it is required from the media device player 154 to reproduce the DRM media content data, the web server module part 164 receives from the resource manager part 230 the local file path of the required DRM media content data corresponding to the URL path for web server. The web server module part 164 reads the required DRM media content data stored in the local file memory 156 using the local file path of the required DRM media content data. The web server module part 164 provides the DRM media content data read from the local file memory 156 to the decoding module part 166, and the media content data decoded by the decoding module part 166 is output to the media device player 154.

The web server module part 164 may include a request handler 262 and a file manager 264. The request handler 262 handles the requirement of HTTP request, checks the validity of the URL path for web server including GUID (Globally Unique Identifier), as an OTP (OneTime Password) concept which is changed whenever the DRM media content data is reproduced, and then provides HTTP response information and decoded media content data. If the requirement for DRM content data of a specific resource is included in the requirement for the HTTP request, the file manager 264 converts the URL path for web server into the corresponding to local file path via the resource manager part 230, reads the DRM media content data, decodes it through the decoding module part 166 and then returns the decoded media content data.

The security manager part 250 checks whether the terminal apparatus is operated abnormally, i.e., whether an administrator right is acquired by illegally releasing or hacking a locking device of iPhone of Apple Inc or the Android operating system. If the terminal apparatus is operated abnormally, the security manager part 250 controls the decoding module part 166 so that the decoding operation is not carried out. In this case, if the decoding operation is allowed under security rules, the decoding module part 166 can be controlled to perform the decoding operation of the read DRM media content data.

Further, when packet sniffing that taps the networking traffic in a loopback environment is detected, the decoded media content data transmitted to the media device player 154 through the web server module part 164 may be leaked. Therefore, the security manager part 250 controls the decoding module part 166 so that the decoding operation is not carried out.

In case of a remote reproduction mode, the download manager part 270 downloads and manages the DRM media content data of an external server, e.g., the content providing server 110. In other words, when reproducing the DRM media content data of the external server, not the DRM media content data stored in the local file memory 156, the download manager part 270 functions to store the corresponding DRM media content data in the local file memory 156. In case of a reproduction mode of remote file data(progressive download or download & play), the file manager 264 of the web server module part 164 checks whether the download manager part 270 completely downloads the required DRM media content data before reading the required DRM media content data. If the downloading operation is not completed, the file manager 264 is on standby.

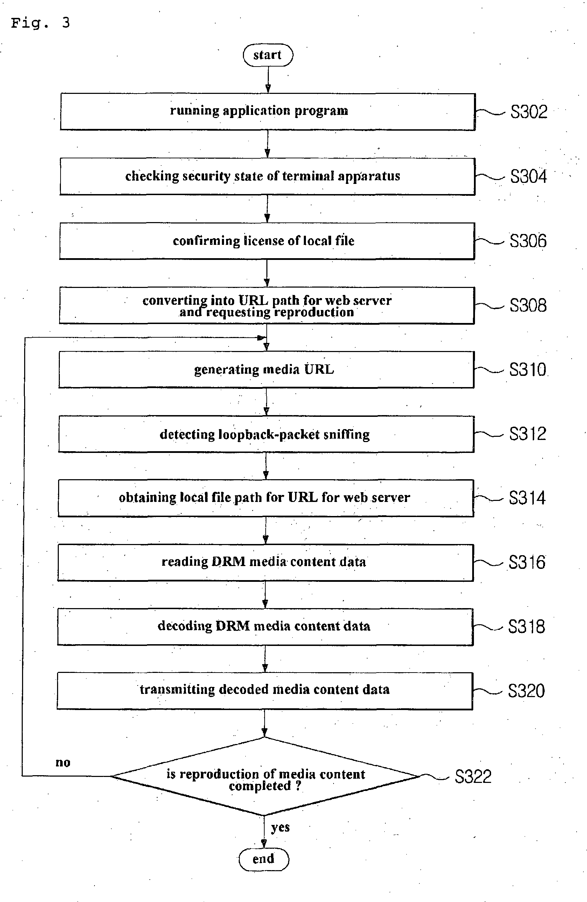

Fig. 3 is a flow chart of a DRM decoding method in the terminal apparatus according to the embodiment of the present invention.

A user runs the application program 152 associated with the reproduction of contents stored in the terminal apparatus (S302). If the user selects and clicks desired DRM media content data, e.g., Documents/video.mp4, out of files displayed in the application program 152, the application program 152 provides the reproduction-related function and the local file path of the DRM media content data to the application interface part 210.

If the reproduction-related function is input, the application interface part 210 calls the security manager part 250 so as to check the security state of the terminal apparatus 140 (S304). The security manager part 250 checks whether the terminal apparatus is operated abnormally, i.e., whether an administrator right is acquired by illegally releasing or hacking a locking device of iPhone of Apple Inc or the Android operating system (S406). If the terminal apparatus is operated abnormally, the security manager part 250 controls the decoding module part 166 so that the decoding operation is not carried out. In case that it is determined that the terminal apparatus 140 is operated normally, the local file path of the required DRM media content data input to the application interface part 210 is provided to the resource manager part 230.

The resource manager part 230 provides the local file path input to the license manager part 220, e.g., Documents/video.mp4, and then requests the confirming and issuing of the license for the required DRM media content data (S306).

Moreover, when the license for the required DRM media content data is confirmed, the resource manager part 230 converts the local file path of the required DRM media content data into the URL path for web server, and then requests the reproduction of URL for web server, e.g., http://localhost/xxxx_video.mp4 to the media player controller 240 (S308). Herein, the converting is a wide concept including the matching and all configurations which can use the URL for web server.

The media player controller 240 generates the object of a basic media device player 154 built in the terminal apparatus 140 and then provides it to the basic media device player 154. The basic media device player 154 generates the URL, e.g., GET/xxxx_video.mp4, and requests the required DRM media content data of, for example, 0-16384 bytes (S310).

If the required DRM media content data is required by the media device player 154, the web server module part 164 calls the security manager part 250 so as to check the security state. When the packet sniffing that taps the networking traffic in a loopback environment is detected (S312), the decoded media content data transmitted to the media device player 154 through the web server module part 164 may be leaked. Therefore, the security manager part 250 controls the decoding module part 166 so that the decoding operation is not carried out.

And if it is determined by the calling of the security manager part 250 that the terminal apparatus 140 is operated normally, the web server module part 164 obtains the local file path with respect to the URL for web server from the resource manager part 230.

If the local file path is received from the resource manager part 230, the file manager 264 of the web server module part 164 reads the DRM media content data stored in the local file memory 156 using the local file path (S316).

The web server module part 164 provides the read DRM media content data to the decoding module part 166. The decoding module part 166 requests the confirming of the license to the license manager part 220, and decodes the required DRM media content data using the desired encryption key (CEK) information from the license manager part 220 (S318).

The request handler 262 of the web server module part 164 transmits the decoded media content data to the media device player 154 (S320). In this case, the web server module part 164 transmits response information, for example, HTTP 200 OK and 0-16384 bytes to the media device player 154.

The media device player 154 reproduces the decoded media content received from the web server module part 164, and checks whether the media content is completely reproduced (S322). If the media content is completely reproduced, other media content is reproduced, or the reproduction of the media content is stopped. Otherwise, the media device player 154 continuously requests data of the same media content.

The DRM decoding method in the terminal apparatus shown in Fig. 3 can be provided in a state of being stored in a readable recoding medium. Herein, the readable recoding medium includes App Store that can purchase the application program.

According to the present invention, since the local web server module is provided in the terminal apparatus, it is possible to reproduce the DRM media content data in the terminal apparatus without the exclusive DRM decoding module.

While the present invention has been described with respect to the specific embodiments, it will be apparent to those skilled in the art that various changes and modifications may be made without departing from the scope of the invention as defined in the following claims.

## Claims

1. A terminal apparatus (140) with a DRM decoding function, comprising:
a native unit (150) which is provided with a local file memory (156) for storing DRM media content data (112) and an application program (152) for driving a media device player (154) using an operating system; and
a DRM decoding unit (160) which reads the DRM media content data (112) from the local file memory (156) using a URL path for web server, when it is required from the application program (152) to reproduce the DRM media content data (112), and decodes the read DRM media content data (112), and provides the decoded DRM media content data to the media device player (154), and
the DRM decoding unit (160) converts a local file path of the DRM media content data (112) into a URL path for web server, when it is required from the application program (152) to reproduce the DRM media content data (112), and provides it to the media device player (154), and inversely converts the URL path for web server into the physical local file path of the DRM media content data (112), when it is required from the media device player (154) to reproduce the DRM media content data (112), reads the DRM media content data (112) from the local file memory (156), decodes the read DRM media content data (112) and then provides the decoded DRM media content data to the media device player (154).

2. The terminal apparatus (140) of claim 1, wherein the DRM decoding unit (160) comprises:
a decoding module part (166) which decodes the DRM media content data (112);
a resource manager part (230) which converts the local file path of the DRM media content data (112) into the URL path for web server and then manages it; and
a web server module part (164) which receives the local file path of the DRM media content data (112) corresponding to the URL path for web server, when it is required from the media device player (154) to reproduce the DRM media content data (112), reads the DRM media content data (112) from the local file memory (156), decodes the read DRM media content data (112) using the decoding module (166), and then provides the decoded DRM media content data to the media device player (154).

3. The terminal apparatus (140) of claim 2, wherein the web server module part (164) comprises:
a request handler (262) which provides the decoded media content data and HTTP response information in response to an HTTP (Hyper Text Transfer Protocol) range request from the media device player (154); and
a file manager (264) receives from the resource manager part (230) the local file path of the DRM media content data (112) corresponding to the URL path for web server, when the requirement for reproducing the DRM media content data (112) is included in the HTTP range request, reads the DRM media content data (112) from the local file memory (156), decodes the read DRM media content data (112) using the decoding module (166), and then returns the decoded DRM media content data to the request handler (262).

4. The terminal apparatus (140) of claim 3, wherein the request handler (262) checks validity of the URL path for web server including GUID (Globally Unique Identifier), as an OTP (OneTime Password) concept which is changed whenever the DRM media content data (112) is reproduced.

5. The terminal apparatus (140) of any one of claims 2 to 4, wherein the DRM decoding unit (160) further comprises:
a license manager part (220) which manages a license for the DRM media content data (112); and
a media player controller part (240) which performs the reproducing and controlling of the media device player (154), wherein the resource manager part (230) provides the local file path of the DRM media content data (112) to the license manager part (220) so as to check whether there is a license, and then requests the reproduction of the URL path for web server to the media player controller part (240), when the license for the DRM media content data (112) is normal.

6. The terminal apparatus (140) of claim 5, wherein the decoding module part (166) requests the checking of the license to the license manager part (220), when the read DRM media content data (112) is received from the web server module part (164), receives a desired encryption key and then decodes the read DRM media content data (112).

7. The terminal apparatus (140) of any one of claims 2 to 4, wherein the DRM decoding unit (160) further comprises a download manger part (270) which downloads the DRM media content data (112) from an external server (110) and then stores it in the local file memory (156), and
wherein, when it is required from the application program (152) to reproduce the DRM media content data (112), the web server module part (164) checks whether the download manager part (270) completely downloads the corresponding DRM media content data (112) before reading the corresponding DRM media content data (112).

8. The terminal apparatus (140) of any one of claims 2 to 4, wherein the DRM decoding unit (160) further comprises a security manager part (250) which checks whether the terminal apparatus (140) is operated abnormally and then controls the DRM media content data (112) read from the decoding module part (166) so as to be decoded or not decoded according to security rules, when the terminal apparatus (140) is operated abnormally.

9. The terminal apparatus (140) of claim 8, wherein the web server module part (164) calls the security manager part (250), when it is required from the media device player (154) to reproduce the DRM media content data (112), and controls the DRM media content data (112) read from the decoding module part (166) so as to be not decoded, when packet sniffing that taps the networking traffic in a loopback environment is detected.

10. A DRM decoding method in a terminal apparatus (140) which is provided with a local file memory (156) for storing DRM media content data (112) and an application program (152) for driving a media device player (154) using an operating system, comprising:
a decoding step (S318), using a URL path for web server, of reading the DRM media content data (112) from the local file memory (156) using the URL path for web server (S316), when it is required from the application program (152) to reproduce the DRM media content data (112) (S302), decoding the read DRM media content data (112) (S318) and then providing the decoded DRM media content data to the media device player (154) (S320), wherein the decoding step (S318) using the URL path for web server comprises:
converting a local file path of the DRM media content data (112) into the URL path for web server (S308), when it is required from the application program (152) to reproduce the DRM media content data (112) (S302) and then providing it to the media device player (154) (S320);
inversely converting the URL path for web server into the local file path of the DRM media content data (112) (S310), when it is required from the media device player (154) to reproduce the DRM media content data (112), reading the DRM media content data (112) from the local file memory (156) (S316) and then decoding the read DRM media content data (112) (S318); and
providing the decoded DRM media content data to the media device player (154) (S320).

11. The DRM decoding method of claim 10, wherein the providing of the URL path for web server to the media device player (154) comprises providing the local file path of the DRM media content data (112) so as to check whether there is a license (S306), and then providing the URL path for web server to the media device player (154) (S308) when the DRM media content data (112) is normally licensed.

## Patentansprüche

1. Endgerätvorrichtung (140) mit einer DRM-Dekodierfunktion, die Folgendes aufweist:
eine systemeigene Einheit (150), die mit einem lokalen Dateispeicher (156) zum Speichern von DRM-Medieninhaltsdaten (112) und mit einem Anwendungsprogramm (152) zum Treiben eines Medienvorrichtungabspielgeräts (154) unter Verwendung eines Betriebssystems versehen ist; und
eine DRM-Dekodiereinheit (160), die die DRM-Medieninhaltsdaten (112) aus dem lokalen Dateispeicher (156) unter Verwendung eines URL-Pfads für einen Webserver ausliest, wenn von dem Anwendungsprogramm (152) gefordert wird, die DRM-Medieninhaltsdaten (112) zu reproduzieren, und die die ausgelesenen DRM-Medieninhaltsdaten (112) dekodiert, und die dekodierten DRM-Medieninhaltsdaten für das Medienvorrichtungsabspielgerät (154) bereitstellt, und
wobei die DRM-Dekodiereinheit (160) einen lokalen Dateipfad der DRM-Medieninhaltsdaten (112) in einen URL-Pfad für einen Webserver konvertiert, wenn von dem Anwendungsprogramm (152) gefordert wird, die DRM-Medieninhaltsdaten (112) zu reproduzieren, und für das Medienvorrichtungsabspielgerät (154) bereitstellt, und umgekehrt den URL-Pfad für einen Webserver in den physikalischen lokalen Dateipfad der DRM-Medieninhaltsdaten (112) konvertiert, wenn von dem Medienvorrichtungsabspielgerät (154) gefordert wird, die DRM-Medieninhaltsdaten (112) zu reproduzieren, die DRM-Medieninhaltsdaten (112) aus dem lokalen Dateispeicher (156) ausliest, die ausgelesenen DRM-Medieninhaltsdaten (112) dekodiert und anschließend die dekodierten DRM-Medieninhaltsdaten für das Medienvorrichtungsabspielgerät (154) bereitstellt.

2. Endgerätvorrichtung (140) nach Anspruch 1, wobei die DRM-Dekodiereinheit (160) Folgendes aufweist:
ein dekodierendes Modulteil (166), das die DRM-Medieninhaltsdaten (112) dekodiert;
ein Ressourcenverwaltungsteil (230), das den lokalen Dateipfad der DRM-Medieninhaltsdaten (112) in den URL-Pfad für einen Webserver konvertiert und ihn dann verwaltet; und
ein Webserver-Modulteil (164), das den lokalen Dateipfad der DRM-Medieninhaltsdaten (112) entsprechend dem URL-Pfad für einen Webserver empfängt, wenn von dem Medienvorrichtungsabspielgerät (154) gefordert wird, die DRM-Medieninhaltsdaten (112) zu reproduzieren, die DRM-Medieninhaltsdaten (112) aus dem lokalen Dateispeicher (156) ausliest, die ausgelesenen DRM-Medieninhaltsdaten (112) unter Verwendung des Dekodiermoduls (166) dekodiert und anschließend die dekodierten DRM-Medieninhaltsdaten für das Medienvorrichtungsabspielgerät (154) bereitstellt.

3. Endgerätvorrichtung (140) nach Anspruch 2, wobei das Webserver-Modulteil (164) Folgendes aufweist:
eine Anfrage-Bearbeitungsvorrichtung (262), die die dekodierten Medieninhaltsdaten und HTTP-Antwortinformationen ansprechend auf eine HTTP- (Hyper Text Transfer Protocol-) Reichweiteanfrage von dem Medienvorrichtungabspielgerät (154) bereitstellt; und
einen Dateiverwalter (264), der von dem Ressourcenverwaltungsteil (230) den lokalen Dateipfad der DRM-Medieninhaltsdaten (112) entsprechend dem URL-Pfad für einen Webserver empfängt, wenn das Erfordernis für eine Reproduktion der DRM-Medieninhaltsdaten (112) in der HTTP-Reichweiteanfrage aufgenommen ist, die DRM-Medieninhaltsdaten (112) aus dem lokalen Dateispeicher (156) ausliest, die ausgelesenen DRM-Medieninhaltsdaten (112) unter Verwendung des Dekodiermoduls (166) dekodiert und anschließend die dekodierten DRM-Medieninhaltsdaten an die Anfrage-Bearbeitungsvorrichtung (262) zurückschickt.

4. Endgerätvorrichtung (140) nach Anspruch 3, wobei die Anfrage-Bearbeitungsvorrichtung (262) die Gültigkeit des URL-Pfads für einen Webserver einschließlich einer GUID (Globally Unique Identifier, globale eindeutige Kennung) überprüft, als OTP-Konzept (One Time Password, Passwort zur einmaligen Verwendung), das immer dann geändert wird, wenn die DRM-Medieninhaltsdaten (112) reproduziert werden.

5. Endgerätvorrichtung (140) nach einem der Ansprüche 2 bis 4, wobei die DRM-Dekodiereinheit (160) ferner Folgendes aufweist:
ein Lizenzverwaltungsteil (220), das eine Lizenz für die DRM-Medieninhaltsdaten (112) verwaltet; und
ein Medienabspielgerät-Steuerungsteil (240), das die Reproduktion und Steuerung des Medienvorrichtungsabspielgeräts (154) durchführt, wobei das Ressourcenverwaltungsteil (230) den lokalen Dateipfad der DRM-Medieninhaltsdaten (112) für das Lizenzverwaltungsteil (220) so bereitstellt, dass überprüft wird, ob es eine Lizenz gibt, und anschließend die Reproduktion des URL-Pfads für einen Webserver bei dem Medienabspielgerät-Steuerungsteil (240) anfordert, wenn die Lizenz für die DRM-Medieninhaltsdaten (112) normal ist.

6. Endgerätvorrichtung (140) nach Anspruch 5, wobei das Dekodier-Modulteil (166) die Überprüfung der Lizenz beim Lizenzverwaltungsteil (220) anfordert, wenn die ausgelesenen DRM-Medieninhaltsdaten (112) von dem Webserver-Modulteil (164) empfangen werden, einen erwünschten Chiffrierschlüssel empfängt und anschließend die ausgelesenen DRM-Medieninhaltsdaten (112) dekodiert.

7. Endgerätvorrichtung (140) nach einem der Ansprüche 2 bis 4, wobei die DRM-Dekodiereinheit (160) ferner ein Herunterladeverwaltungsteil (270) aufweist, das die DRM-Medieninhaltsdaten (112) von einem externen Server (110) herunterlädt und anschließend im lokalen Dateispeicher (156) speichert, und
wobei, wenn von dem Anwendungsprogramm (152) gefordert wird, die DRM-Medieninhaltsdaten (112) zu reproduzieren, das Webserver-Modulteil (164) überprüft, ob das Herunterladeverwaltungsteil (270) die entsprechenden DRM-Medieninhaltsdaten (112) vollständig herunterlädt, bevor die entsprechenden DRM-Medieninhaltsdaten (112) ausgelesen werden.

8. Endgerätvorrichtung (140) nach einem der Ansprüche 2 bis 4, wobei die DRM-Dekodiereinheit (160) ferner ein Sicherheitsverwaltungsteil (250) aufweist, das überprüft, ob die Endgerätvorrichtung (140) anomal betrieben wird, und anschließend die DRM-Medieninhaltsdaten (112), die von dem Dekodiermodulteil (166) abgelesen werden, so steuert, dass sie gemäß Sicherheitsregeln dekodiert oder nicht dekodiert werden, wenn die Endgerätvorrichtung (140) anomal betrieben wird.

9. Endgerätvorrichtung (140) nach Anspruch 8, wobei das Webserver-Modulteil (164) das Sicherheitsverwaltungsteil (250) aufruft, wenn von dem Medienvorrichtungsabspielgertä (154) gefordert wird, die DRM-Medieninhaltsdaten (112) zu reproduzieren, und die DRM-Medieninhaltsdaten (112), die von dem Dekodiermodulteil (166) abgelesen werden, so steuert, das sie nicht dekodiert werden, wenn Paket-Sniffing, das den Netzwerkverkehr in einer Rückschleifungsumgebung abgreift, erfasst wird.

10. DRM-Dekodierverfahren in einer Endgerätvorrichtung (140), die mit einem lokalen Dateispeicher (156) zum Speichern von DRM-Medieninhaltsdaten (112) und mit einem Anwendungsprogramm (152) zum Treiben eines Medienvorrichtungabspielgeräts (154) unter Verwendung eines Betriebssystems versehen ist, wobei das Verfahren Folgendes aufweist:
einen Dekodierschritt (S318), unter Verwendung eines URL-Pfads für einen Webserver, zum Auslesen der DRM-Medieninhaltsdaten (112) aus dem lokalen Dateispeicher (156) unter Verwendung des URL-Pfads für einen Webserver (S316), wenn von dem Anwendungsprogramm (152) gefordert wird, die DRM-Medieninhaltsdaten (112) zu reproduzieren (S302),
zum Dekodieren der ausgelesenen DRM-Medieninhaltsdaten (112) (S318) und anschließend zum Bereitstellen der dekodierten DRM-Medieninhaltsdaten für das Medienvorrichtungsabspielgerät (154) (S320), wobei der Dekodierschritt (S318) unter Verwendung des URL-Pfads für einen Webserver Folgendes aufweist:
Konvertieren eines lokalen Dateipfads der DRM-Medieninhaltsdaten (112) zum URL-Pfad für einen Webserver (S308), wenn von dem Anwendungsprogramm (152) gefordert wird, die DRM-Medieninhaltsdaten (112) zu reproduzieren (S302), und anschließendes Bereitstellen davon an das Medienvorrichtungsabspielgerät (154) (S320);
umgekehrtes Konvertieren des URL-Pfads für einen Webserver zu dem lokalen Dateipfad der DRM-Medieninhaltsdaten (112) (S310), wenn von dem Medienvorrichtungsabspielgerät (154) gefordert wird, die DRM-Medieninhaltsdaten (112) zu reproduzieren, Auslesen der DRM-Medieninhaltsdaten (112) aus dem lokalen Dateispeicher (156) (S316) und anschließendes Dekodieren der ausgelesenen DRM-Medieninhaltsdaten (112) (S318); und
Bereitstellen der dekodierten DRM-Medieninhaltsdaten für das Medienvorrichtungsabspielgerät (154) (S320).

11. DRM-Dekodierverfahren nach Anspruch 10, wobei die Bereitstellung des URL-Pfads für einen Webserver für das Medienvorrichtungsabspielgerät (154) ein derartiges Bereitstellen des lokalen Dateipfads der DRM-Medieninhaltsdaten (112) aufweist, dass überprüft wird, ob es eine Lizenz (S306) gibt, und ein anschließendes Bereitstellen des URL-Pfads für einen Webserver für das Medienvorrichtungabspielgerät (154) (S308), wenn die DRM-Medieninhaltsdaten (112) normal lizenziert sind.

## Revendications

1. Terminal (140) ayant une fonction de décodage DRM, comprenant:
- une unité native (150) fournie avec une mémoire de fichier locale (156) pour le stockage de données de contenus multimédia DRM (112) et un programme d'application (152) pour piloter un lecteur de supports de contenus multimédia (154) à l'aide d'un système d'exploitation ; et
une unité de décodage DRM (150) qui lit les données de contenus multimédia DRM (112) à partir de la mémoire de fichier locale (156) en utilisant un chemin d'accès URL pour serveur web, lorsque le programme d'application (152) doit reproduire les données de contenu multimédia DRM (112) et décode les données de contenus multimédia DRM lues (112) et, fournit les données décodées de contenus multimédia DRM au lecteur de supports de contenus multimédia (154), et
l'unité de décodage DRM (160) convertit un chemin d'accès de fichier local des données de contenus multimédia DRM (112) en chemin d'accès URL pour serveur web, lorsque le programme d'application (152) doit reproduire les données des contenus multimédia DRM (112) et fournit celui-ci au lecteur multimédia (154) et inversement convertit le chemin d'accès URL pour serveur web en chemin physique d'accès local des données de contenus multimédia DRM (112), lorsque le lecteur de supports de contenus multimédia (154) doit reproduire les données de contenu multimédia DRM (112), lit les données des contenus multimédia DRM (112) à partir de la mémoire de fichier locale (156), décode les données des contenus multimédia DRM (112) lues et fournit ensuite les données de contenus multimédia DRM décodées au lecteur de supports de contenus multimédia (154}.

2. Terminal (140) de la revendication 1, dans lequel le unité de décodage DRM (160] comprend :
- une portion de module de décodage (166) qui décode les données de contenus multimédia DRM (112) ;
une portion de gestionnaire des ressources (230) qui convertit le chemin d'accès du fichier local des données de contenus multimédia DRM (112) en le chemin d'URL pour serveur web et puis le gère : et
une portion de module de serveur web (164) qui reçoit le chemin d'accès du dossier local des données de contenus multimédia DRM (112) correspondant au chemin d'accès URL pour serveur web, lorsqu'il doit reproduire les données de contenus multimédia à partir du lecteur de supports de contenus multimédia (154), lit les données de contenus multimédia DRM (112) à partir de la mémoire de fichier locale (156), décode les données de contenus multimédia DRM (112) lues en utilisant le module de décodage (166) et fournit les données de contenus multimédia DRM décodés au lecteur de supports de contenus multimédia (154).

3. Terminal (140) de la revendication 2. où la portion de module de serveur web (154) comprend :
un gestionnaire de requêtes (262) qui fournit les données de contenus multimédia décodées et les informations de réponse HTTP en réponse à une requête d'intervalle HTTP (Hyper Text Transfer Protocol) par lecteur de supports de contenus multimédia (154) ; et
un gestionnaire de fichiers (264) reçoit à partir de la une portion de gestionnaire des ressources (230) le chemin d'accès du fichier local des données de contenu de multimédia DRM (112) correspondant au chemin d'accès URL pour serveur web, lorsque la demande de reproduire les données de contenus multimédia DRM (112) est incluse dans la requête d'intervalle http, lit les données de contenus multimédia DRM (112) à partir de la mémoire de fichier locale (156), décode les données de contenu de multimédia DRM (112) en utilisant le module de décodage (166) et puis fournit les données de contenus multimédia DRM décodés au gestionnaire de requêtes (262).

4. Terminal (140) de la revendication 3, dans lequel le gestionnaire de requêtes (262) vérifie la validité du chemin d'accès URL pour serveur web en incluant le GUID (Globally Unique Identifier] comme OTP (One Time Password
- mot de passe à usage unique) qui est changé à chaque fois que les données de contenus multimédia DRM (112) sont reproduites.

5. Terminal (140) (140) selon une quelconque des revendications 2 à 4. où l'unité de décodage DRM (160) comprend en outre :
une portion de gestionnaire de licences (220) qui gère une licence pour les données de contenu de multimédia DRM (112} ; et
une portion de contrôleur de lecteur multimédia (240) qui effectue la reproduction et le contrôle du lecteur de supports de contenus multimédia (154), dans lequel la portion gestionnaire de ressources (230) fournit le chemin d'accès du fichier local des données de contenus multimédia DRM (112) à la portion de gestionnaire de licences (220) afin de vérifier l'existence d'une licence, et demande ensuite à la portion de contrôleur de lecteur de multimédia {240) de reproduire le chemin d'accès pour serveur web URL, lorsque la licence pour les données de contenus multimédia DRM (112) est normale.

6. Terminal (140) de la revendication 5, dans lequel la portion module de décodage (166) demande à la portion de gestionnaire de licence (220) de vérifier la licence, lorsque les données de contenus multimédia DRM (112) lues sont reçues à partir de la portion de module de serveur web (164), reçoit une clé de cryptage désirée et puis décode les données de contenus multimédia DRM lues (112).

7. Terminal (140) selon l'une dans les revendications 2 à 4, où l'unité de décodage DRM (160) comprend en outre une portion de gestionnaire de téléchargement (270) qui télécharge les données de contenus multimédia DRM (112) à partir d'un serveur externe (110) et les stocke ensuite dans la mémoire de fichier locale (156) et
dans lequel, lorsque le programme d'application (152) demande à la portion de module de serveur web (164) de reproduire les données de contenu de multimédia DRM (112), celle-ci vérifie si la portion de gestionnaire de téléchargement (270) télécharge complètement les données de contenus multimédia DRM (112) correspondantes avant de lire les données de contenus multimédia DRM (112) correspondantes.

8. Terminal (140) de l'une quelconque des revendications 2 à 4, où l'unité de décodage DRM (160) comprend en outre une portion de gestionnaire de sécurité (250) qui vérifie si le terminal (140) fonctionne anormalement et contrôle ensuite les données de contenus multimédia DRM (112) lues à partir de la portion de module de décodage (166) afin d'être décodées ou ne pas être décodées selon les règles de sécurité, lorsque le terminal (140) fonctionne anormalement.

9. Terminal (140) de la revendication 8, dans lequel la portion de module de serveur web (164) appelle la portion de gestionnaire de sécurité (250), lorsque le lecteur de supports de contenus multimédia (154) lui demande de reproduire les données de contenus multimédia DRM (112) et contrôle les données de contenus multimédia DRM (112) lues à partir de la portion de module de décodage (156) afin de ne pas être décodées, lors de la détection de reniflement de paquets exploitant le trafic réseau dans un environnement de bouclage.

10. Une méthode de décodage DRM dans un terminal (140) qui est fourni avec fourni avec une mémoire de fichier locale (156) pour le stockage de données de contenus multimédia DRM (112) et un programme d'application (152) pour piloter un lecteur de supports de contenus multimédia (154) à l'aide d'un système d'exploitation, comprenant :
une étape de décodage (S318), à l'aide d'un chemin d'accès URL pour serveur web, de la lecture de données de contenu multimédia DRM (112) à partir de la mémoire de fichier locale (156) en utilisant le chemin d'accès de serveur web URL (S316) lorsque le programme d'application (152) doit reproduire les données de contenus multimédia DRM (112) (S302), en décodant les données de contenus multimédia DRM (112) (S318) lues et ensuite fournir les données de contenus multimédia DRM décodées au lecteur se supports de contenus multimédia (154) (S320), dans lequel l'étape de décodage (S318) à l'aide du chemin d'accès URL pour serveur web comprend :
la conversion d'un chemin d'accès du fichier local de données de contenus multimédia DRM (112) en chemin d'accès URL pour le serveur web (S308), lorsque le programme d'application (152) doit reproduire les données de contenus multimédia DRM (112) (S302) et puis la fourniture de celui-ci au lecteur de supports de contenus multimédia (154) (S320) ;
inversement la conversion d'un chemin d'accès URL pour serveur web en chemin d'accès du fichier local des données de contenus multimédia DRM (112) (S310) lorsque le lecteur contenus multimédia (154) doit reproduire les données de contenus multimédia DRM (112), la lecture des données de contenu multimédia DRM (112) à partir de la mémoire de fichier locale (156) (S316) et le décodage des données de contenus multimédia DRM lues (112) (S318) ; et,
la fourniture des données de contenus multimédia DRM décodés au lecteur de supports de contenus multimédia (154) (S320).

11. La méthode de décodage DRM de la revendication 10, dans laquelle la fourniture du chemin d'accès URL pour serveur web au lecteur de supports de contenus multimédia (154) comprend la fourniture du chemin d'accès du fichier local des données de contenus multimédia DRM (112) afin de vérifier l'existence d'une licence (S306), et ensuite la fourniture du chemin d'accès URL pour serveur web au lecteur de supports de contenus multimédia (154) (S308) lorsque les données des contenus multimédias DRM (112) sont autorisées normalement.
